# EUROPEAN PATENT APPLICATION

(11) **EP 2 792 894 A1**
(43) Date of publication of application: **22.10.2014**
(21) Application number: 14164877.4
(22) Date of filing: 16.04.2014
(51) Int. Cl.: F16C 33/66

(54) **Rolling bearing device**

(30) Priority: 19.04.2013 JP 2013088592
(71) Applicant: JTEKT Corporation, Osaka-shi, Osaka 542-8502 (JP)
(72) Inventor: Misada, Yasuharu, Osaka-shi, Osaka 542-8502 (JP)
(74) Representative: Winter, Brandl, Fürniss, Hübner, Röss, Kaiser, Polte - Partnerschaft mbB

(57) **Abstract**

A rolling bearing device (1) includes a rolling bearing (3), and a lubricant reservoir (19) that is formed in a fixed side of the inner ring and the outer ring of the bearing or in a member adjacent to the fixed side, e.g. in an outer ring spacer (12). A lubricant (GL) containing base oil, a gelling agent and water is disposed so as to be contained in the lubricant reservoir (19). The lubricant has a uniform base oil concentration. The base oil concentration is 40% by weight to 50% by weight.

## Description

### BACKGROUND OF THE INVENTION

### 1. Field of the Invention

The invention relates to a rolling bearing device.

### 2. Description of Related Art

Conventionally, there has been known a rolling bearing device which is used for a spindle of a machine tool, and which includes a lubricant-inclusion type lubrication mechanism. The lubricant-inclusion type rolling bearing device is described, for example, in Japanese Patent Application Publication No. 2006-234072 (JP2006-234072A). The rolling bearing device includes a rolling bearing and a lubricant reservoir-formed component having a lubricant reservoir disposed inside thereof. The lubricant reservoir-formed component is disposed adjacent to an outer ring. A lubricant is disposed so as to be contained in the lubricant reservoir.

In JP2006-234072A, as a lubricant disposed in the lubricant reservoir, grease obtained by dispersing a thickener in base oil (lubricating oil) in a liquid state is employed. In the machine tool requiring high-speed rotation performance, it is necessary to continue to uninterruptedly supply the base oil into an inner portion of the rolling bearing for a long period of time. The inventor of the present invention conducted a rolling fatigue life test by using rolling bearing devices each of which was the same as that described in JP2006-234072A. When a long period of time had elapsed from the start of the test, poor lubrication was detected in a certain rolling bearing device. When the rolling bearing device in which the poor lubrication had occurred was analyzed, an oil content of the lubricant inside the lubricant reservoir had not decreased. That is, it is presumed that the base oil contained in the lubricant inside the lubricant reservoir was supplied into the inner portion of the rolling bearing with low efficiency, and as a result, the poor lubrication had occurred. Further, the reason is considered to be that the base oil exuded from the lubricant with low efficiency.

Meanwhile, it is conceivable to store only the base oil in the lubricant reservoir (that is, it is conceivable to use only the base oil as the lubricant), in order to improve efficiency in supplying the base oil into the rolling bearing. However, in this case, there is a possibility that a structure of the lubricant reservoir becomes complicated since it is necessary to provide a sealing structure for containing the base oil in a leak-proof manner.

### SUMMARY OF THE INVENTION

An object of the present invention is to provide a rolling bearing device in which efficiency, with which base oil exudes from a lubricant, is improved so that the base oil can be continuously supplied into an inner portion of a rolling bearing for a long period of time and thus, a service life is increased.

According to an aspect of the present invention, there is provided a rolling bearing device including a rolling bearing that includes an inner ring, an outer ring and multiple rolling elements disposed between the inner ring and the outer ring; and a lubricant reservoir that is formed in a fixed side of the inner ring and the outer ring or in a member adjacent to the fixed side, wherein a lubricant containing base oil, a gelling agent and water is disposed so as to be contained in the lubricant reservoir.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a sectional view of a rolling bearing device according to a first embodiment of the present invention;
FIG. 2 is a sectional view illustrating an inner portion of a lubricant reservoir after a long period of time elapses after start of use;
FIG. 3 is a sectional view illustrating the inner portion of the lubricant reservoir according to a second embodiment;
FIGS. 4A and 4B are sectional views each illustrating the inner portion of the lubricant reservoir after a long period of time elapses after start of use; and
FIG. 5 is a sectional view illustrating the inner portion of the lubricant reservoir according to a third embodiment of the present invention.

### DETAILED DESCRIPTION OF EMBODIMENTS

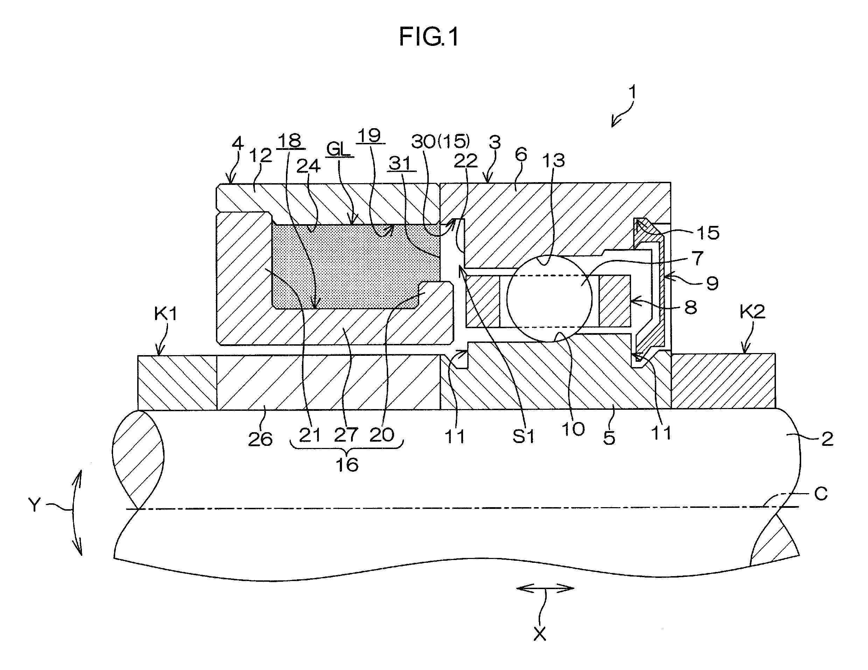

Hereinafter, embodiments of the present invention will be described in detail with reference to the accompanying drawings. FIG. 1 is a sectional view of a rolling bearing device 1 according to a first embodiment of the present invention. For example, the rolling bearing device 1 is a device that supports a main shaft (shaft supported by a rolling bearing) 2 of a machine tool. The rolling bearing device 1 includes a rolling bearing 3 and a lubricant storage member (member adjacent to a fixed side) 4. The rolling bearing 3 is constituted by an angular contact ball bearing. The lubricant storage member 4 is disposed adjacent to the rolling bearing 3.

As illustrated in FIG. 1, the rolling bearing 3 includes an inner ring 5, an outer ring (fixed side of inner and outer rings) 6, rolling elements 7, a cylindrical cage 8 and a seal 9. An inner periphery of the inner ring 5 is fitted to an outer periphery of the main shaft 2. An outer periphery of the outer ring 6 is fitted to an inner periphery of a housing (not illustrated) of the machine tool. The rolling elements 7 are interposed between the inner ring 5 and the outer ring 6. The cage 8 retains the multiple rolling elements 7 at constant intervals in a circumferential direction Y. The seal 9 seals one end (right end in FIG. 1) of an annular space between the inner ring 5 and the outer ring 6 in an axial direction (axial direction of the main shaft 2) X. In FIG. 1, as the rolling bearing 3, the angular contact ball bearing is employed. However, instead of the angular contact ball bearing, a deep groove ball bearing may be employed. In addition, a cylindrical roller bearing or a tapered roller bearing may be employed.

An inner ring raceway surface 10 on which the rolling elements 7 roll is formed in a central portion of an outer peripheral surface of the inner ring 5 in the axial direction X. A first seal groove 11 is formed in each of both end portions of the outer peripheral surface of the inner ring 5 in the axial direction X. An inner peripheral portion (seal lip) of the seal 9 is fitted into the first seal groove 11 on one side (right side in FIG. 1) in the axial direction X. The inner ring 5 and an inner ring spacer (to be described below) 26 are positioned in the axial direction X by spacers K1, K2 that are fixed to the main shaft 2.

An outer ring raceway surface (fixed-side raceway surface) 13 on which the rolling elements 7 roll is formed in a central portion of an inner peripheral surface of the outer ring 6 in the axial direction X. A second seal groove 15 is formed in each of both end portions of the inner peripheral surface of the outer ring 6 in the axial direction X. An outer peripheral portion of the seal 9 is fitted into the second seal groove 15 on one side (right side in FIG. 1) in the axial direction X. The inner ring spacer 26 is disposed adjacent to the outer ring 6, that is, the outer ring spacer 12 is disposed on the other side (left side in FIG. 1) of the outer ring 6 in the axial direction X.

The second seal groove 15 on the other side (left side in FIG. 1) in the axial direction X functions as an annular groove 30 (around the outer ring raceway surface 13) which can store a lubricant GL. The annular groove 30 is formed by a stepped portion 22 disposed in the end portion (left side portion in FIG. 1) of the outer ring 6 on the other side in the axial direction X. The stepped portion 22 is connected to an end face (left end face in FIG. 1, hereinafter, referred to as "other end face") of the outer ring 6 on the other side in the axial direction X. The annular groove 30 is filled with the lubricant GL.

The lubricant storage member 4 includes the outer ring spacer 12 and an oil storage ring 16. The oil storage ring 16 is fixed to the outer ring spacer 12 by a bolt (not illustrated). The outer ring spacer 12 is a cylindrical member which is in contact with the other end face (left end face in FIG. 1) of the outer ring 6 and whose outer periphery is fitted to the housing (not illustrated) of the machine tool. The outer ring spacer 12 and the outer ring 6 are positioned in the axial direction X by a positioning member (not illustrated) fixed to the housing (not illustrated).

The oil storage ring 16 has a cylindrical shape around a central axis C of the main shaft 2. The oil storage ring 16 includes a cylindrical bottom portion 27, an annular plate-shaped first side wall 20 and an annular plate-shaped second side wall 21. The bottom portion 27 surrounds an outer periphery of the inner ring spacer 26. The first side wall 20 protrudes radially outward from one end portion (right end portion in FIG. 1) of the bottom portion 27 in the axial direction X. The second side wall 21 protrudes radially outward from the other end portion (left end portion in FIG. 1) of the bottom portion 27 in the axial direction X. An outer peripheral end of the second side wall 21 is in contact with an inner peripheral surface 24 of the outer ring spacer 12. An outer peripheral wall of the bottom portion 27, an inner wall of the first side wall 20 and an inner wall of the second side wall 21 define and form an annular lubricant containing groove 18 whose outer peripheral side is open. The lubricant containing groove 18 and the inner peripheral surface 24 of the outer ring spacer 12 form a lubricant reservoir 19 that is an annular space for storing the lubricant GL.

The first side wall 20 of the oil storage ring 16 is located inside the rolling bearing 3, that is, located between the inner ring 5 and the outer ring 6. More specifically, the portion of the first side wall 20 is disposed radially inside the annular groove 30. A diameter of an outer peripheral end of the first side wall 20 is set to be smaller than an inside diameter of the outer ring spacer 12 (diameter of the inner peripheral surface 24). An opening 31 facing the stepped portion 22 (annular groove 30) of the rolling bearing 3 is formed at a location that is one end of the lubricant reservoir 19 in the axial direction X and is also an outer peripheral end of the lubricant reservoir 19. More specifically, the opening 31 is formed by one end (right end in FIG. 1) of the inner peripheral surface 24 of the outer ring spacer 12 in the axial direction X and the outer peripheral end of the first side wall 20. The opening 31 is disposed close to the second seal groove 15 of the outer ring 6. The opening 31 provides communication between an outer peripheral side portion inside the lubricant reservoir 19 and an inner portion of the annular groove 30.

The lubricant GL contains base oil (liquid), water, a gelling agent and an aqueous solution of calcium (concentration of 2% by weight). The base oil and water are gelled in a uniformly mixed state, due to the action of the gelling agent. The lubricant GL is in a state where viscosity thereof is higher and fluidity thereof is lower than those of the base oil. As a result, the lubricant GL having a shape retaining property is contained in the lubricant reservoir 19. The lubricant GL disposed in the lubricant reservoir 19 has a uniform base oil concentration. As the base oil, it is possible to employ esters, polyalphaolefins or the like. As the gelling agent, it is possible to employ, for example, water-soluble natural polymer polysaccharide gellan gum (for example, "Kelcogel" (trademark, CP Kelco, Inc.)). As the gelling agent, it is also possible to employ another gelling agent such as carrageenan or agar. The base oil concentration of the lubricant GL is 40% by weight to 50% by weight. For example, in the case of the lubricant GL having the base oil concentration of 40% by weight, a mixing ratio (weight ratio) of the base oil, the gelling agent, the water and the aqueous solution of calcium (2% by weight) is 20 : 30 : 1 : 1.

The water contained in the lubricant GL evaporates with time. As the water evaporates, the base oil exudes from the lubricant GL. The efficiency, with which the base oil exudes from the lubricant GL having the base oil concentration of 40% by weight to 50% by weight, is higher than the efficiency with which the base oil exudes in a case where grease obtained by dispersing a thickener in the base oil is employed in the lubricant. The lubricant GL is produced in the following manner, for example.

First, the gelling agent and the water are poured into a container. After the gelling agent is sufficiently dissolved in the water, the base oil and the aqueous solution of calcium are added thereto, and a mixed liquid thereof is heated to a predetermined temperature (90°C, for example). Then, ultrasonic vibrations are applied to the mixed liquid by using a stick. Droplets in the mixed liquid are atomized by shock waves caused by the ultrasonic vibrations. Thus, the mixed liquid is agitated, and accordingly, the base oil and the water are mixed with each other (emulsified).

However, when an agent having high viscosity is employed as the gelling agent, the base oil and the water are not sufficiently mixed with each other only by using the ultrasonic vibrations. Accordingly, a separation vortex forcibly generated by an agitating stick or an agitating blade is used to agitate the mixed liquid. After the mixed liquid is agitated, the mixed liquid is caused to flow into a space between the oil storage ring 16 of the outer ring spacer (spacer) 12 so as to be cooled. At this time, when the temperature of the mixed liquid inside the outer ring spacer 12 is decreased to approximately 40°C, gelation of the mixed liquid starts, and the lubricant GL is produced as a result of the gelation of the mixed liquid.

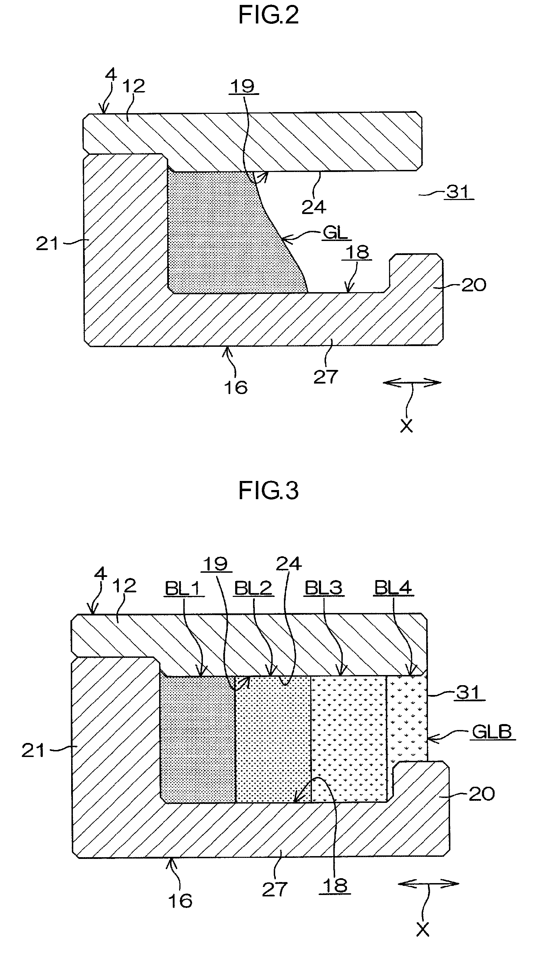

A case has been described where the lubricant GL contains the aqueous solution of calcium. However, the aqueous solution of calcium is not essential. The lubricant GL can be produced by using the base oil, the water and the gelling agent. FIG. 2 is a sectional view illustrating an inner portion of the lubricant reservoir 19 after a long period of time elapses after start of use. The water gradually evaporates and the base oil gradually exudes from portions of the lubricant GL disposed in the lubricant reservoir 19, in order from a portion of the lubricant GL close to the opening 31 to a portion of the lubricant GL far from the opening 31. Therefore, as illustrated in FIG. 2, the portions of the lubricant GL disposed in the lubricant reservoir 19 are gradually consumed and thus disappear, in order from the portion of the lubricant GL close to the opening 31 to the portion of the lubricant GL far from the opening 31.

As illustrated in FIGS. 1 and 2, the base oil exuding from the lubricant GL in the lubricant reservoir 19 is supplied to the annular groove 30 through the opening 31, as the base oil from the lubricant GL is consumed in the annular groove 30. Then, the base oil exuding from the lubricant GL in the lubricant reservoir 19 is moved to the lubricant GL in the annular groove 30. The base oil from the lubricant GL stored in the annular groove 30 is drawn and moved into the outer ring raceway surface 13. Therefore, the lubricant GL in the lubricant reservoir 19 is also continuously supplied to the outer ring raceway surface 13 through the annular groove 30. As a result, the inner ring raceway surface 10, the outer ring raceway surface 13 and the rolling elements 7 are maintained in a good lubricating state for a long period of time.

As described above, according to this embodiment, the base oil and the water in the mixed state are gelled due to the action of the gelling agent. Thus, it is possible to obtain the lubricant which has the shape retaining property, and in which the base oil and the water are mixed. The lubricant GL containing the base oil, the gelling agent and the water as described above is contained in the lubricant reservoir 19. The water contained in the lubricant GL evaporates with time, and the base oil exudes from the lubricant GL due to the evaporation. Therefore, it is possible to cause the base oil to efficiently exude from the lubricant GL. Therefore, it is possible to appropriately supply the base oil contained in the lubricant GL to the outer ring raceway surface 13 of the outer ring 6.

An amount of the base oil exuding from the lubricant GL increases with an increase in an amount of the water evaporating from the lubricant GL. When the machine tool, on which the rolling bearing device 1 is provided, is operated, the temperature of the lubricant reservoir 19 becomes high due to frictional heat generated during the rotation of the main shaft 2. Accordingly, the amount of the water evaporating from the lubricant GL increases. As a result, the amount of the base oil exuding from the lubricant GL increases. Thus, since the exudation of the base oil from the lubricant GL is promoted when the machine tool is operated, it is possible to appropriately and efficiently supply the base oil from the lubricant GL disposed in the lubricant reservoir 19.

In the above-described manner, it is possible to appropriately and continuously supply the base oil to the outer ring raceway surface 13 of the outer ring 6 for a long period of time. Thus, it is possible to provide the rolling bearing device 1 that has an increased service life. FIG. 3 is a sectional view illustrating the inner portion of the lubricant reservoir 19 according to a second embodiment. In the second embodiment, the same reference numerals as those in FIGS. 1 and 2 will be assigned to portions corresponding to the respective portions described in the above-described first embodiment, and description thereof will not be repeated.

The feature of the second embodiment is that in a lubricant GLB disposed in the lubricant reservoir 19, the base oil concentration varies with respect to the axial direction X. Specifically, in the lubricant GLB, the base oil concentration increases in a direction toward a side away from the opening 31 (i.e., toward the left side in FIG. 3) with respect to the axial direction X. More specifically, the lubricant GLB is divided into, for example, four lubricant blocks that are BL1, BL2, BL3, BL4 disposed in the this order from the side opposite to the rolling bearing 3 (left side in FIG. 3) with respect to the axial direction X. Four lubricant blocks BL1, BL2, BL3, BL4 have base oil concentrations different from each another. For example, the base oil concentration of the lubricant block BL1 is 50% by weight, and the base oil concentration of the lubricant block BL2 is 40% by weight to 30% by weight. For example, the base oil concentration of the lubricant block BL3 is 30% by weight to 20% by weight, and the base oil concentration of the lubricant block BL4 is 0.5% by weight. In other words, the lubricant blocks BL1, BL2, BL3, BL4 are disposed so that that the base oil concentration of the lubricant block is higher as the lubricant block is disposed further from the opening 31 with respect to the axial direction X. Each of the lubricant blocks BL1, BL2, BL3, BL4 has a substantially rectangular cross sectional shape orthogonal to a circumferential direction.

The lubricant blocks BL1, BL2, BL3, BL4 are formed as follows. The lubricants with the base oil concentrations different from each another are produced by using the producing method described in the first embodiment. Then, the lubricant blocks BL1, BL2, BL3, BL4 with the produced lubricants are juxtaposed in the above-described order along the axial direction X. As is the case with the first embodiment described above, portions of the lubricant GLB disposed in the lubricant reservoir 19 are gradually consumed and thus disappear, in order from the portion of the lubricant GLB close to the opening 31 to the portion of the lubricant GLB far from the opening 31. Therefore, since the base oil concentration of the lubricant GLB close to the opening 31 is low, the amount of the base oil exuding from the lubricant GLB is small immediately after start of use. However, since the base oil exuding from the lubricant GLB disposed in the annular groove 30 is supplied mainly to the outer ring raceway surface 13 immediately after start of use, the appropriate lubricating state of the rolling bearing 3 is maintained even though the amount of the base oil exuding from the lubricant GLB is small.

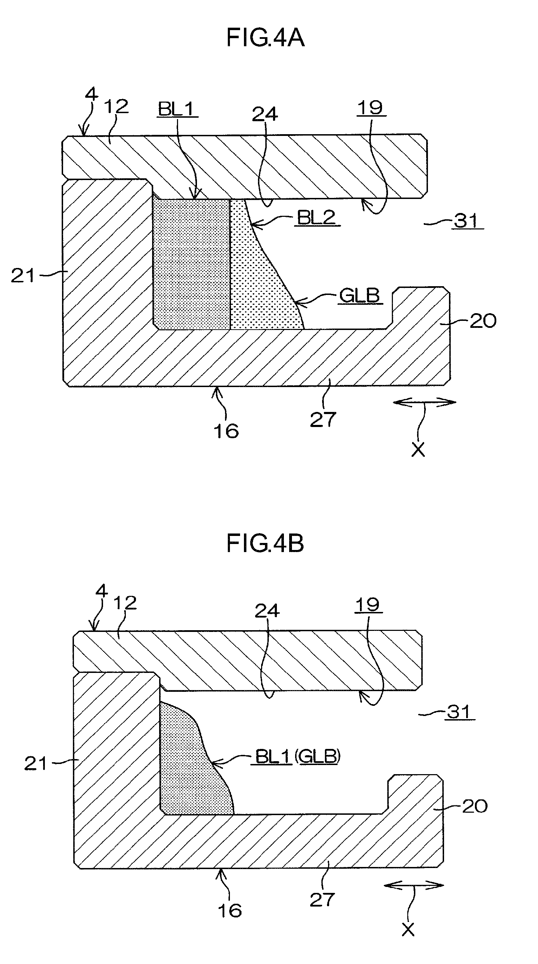

FIGS. 4A and 4B are sectional views each illustrating the inner portion of the lubricant reservoir 19 after a long period of time elapses after start of use. FIG. 4A illustrates a state after a first predetermined time period (for example, 5,000 hours) elapses after start of use. FIG. 4B illustrates a state after a second predetermined time period (second time period > first time period; for example, 7,000 hours) elapses after start of use. In FIG. 4A, the lubricant blocks BL3 BL4 having the low base oil concentrations have completely disappeared, the lubricant block BL1 having the highest base oil concentration remains almost completely, and the lubricant block BL2 having the second highest base oil concentration partially remains. In FIG. 4B, the lubricant blocks BL2, BL3, BL4 have completely disappeared, and only the lubricant block BL1 having the highest base oil concentration partially remains. That is, as illustrated in FIGS. 4A and 4B, at the time when a long period of time (for example, 5,000 hours or 7,000 hours) elapses after start of use, the base oil concentration of the lubricant GLB disposed (remaining) in the lubricant reservoir 19 is high. As a result, the amount of the base oil exuding from the lubricant GLB is large. Thus, it is possible to appropriately and continuously supply the base oil to the outer ring raceway surface 13 for a long period of time.

The lubricant blocks BL1, BL2, BL3, BL4 having the base oil concentrations different from each other are juxtaposed in the above-described order along the axial direction X. Thus, it is possible to easily realize a configuration where the lubricant GLB is disposed in the lubricant reservoir 19 so that the base oil concentration increases in a direction away from the outer ring raceway surface 13. The lubricant block BL4 closest to the opening 31 may be a lubricant block having the lubricant whose base oil concentration is 0% (lubricant without a base oil component).

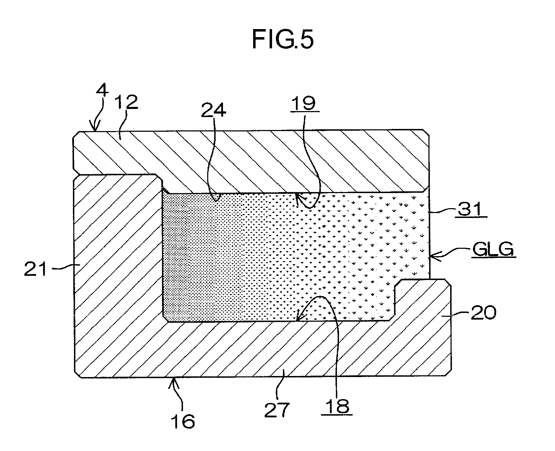

A case has been described where the lubricant GLB is divided into four blocks with different base oil concentrations. However, the lubricant GLB may be divided into two or three blocks with different base oil concentrations, or may be divided into five or more blocks with different base oil concentrations. FIG. 5 is a sectional view illustrating the inner portion of the lubricant reservoir 19 according to a third embodiment of the present invention. In FIG. 5, the same reference numerals as those in FIGS. 1 and 2 will be assigned to portions corresponding to the respective portions described in the above-described first embodiment, and description thereof will not be repeated.

In the third embodiment, a lubricant GLG is disposed in the lubricant reservoir 19 so that the base oil concentration increases in a direction away from the opening 31 with respect to the axial direction X. The third embodiment is similar to the second embodiment in this point. In the third embodiment, the lubricant GLG disposed in the lubricant reservoir 19 has a base oil concentration gradient in which the base oil concentration continuously increases in the direction away from the opening 31 with respect to the axial direction X. Specifically, the lubricant GLG is disposed so that the base oil concentration increases in an inverse proportional manner in the direction away from the opening 31. In this case, the lubricant GLG has the base oil concentration of, for example, 50% by weight at an end portion on a side far from the opening 31 (left end portion illustrated in FIG. 5), and has the base oil concentration of, for example, 0.5% by weight at an end portion on a side close to the opening 31 (right end portion in FIG. 5). The lubricant GLG may have the base oil concentration of 0% by weight at the end portion on the side close to the opening 31 (right end portion in FIG. 5).

As a producing method for the lubricant GLG, a producing method similar to the producing method for the lubricant GL in the first embodiment is employed. However, the lubricant GLG is produced by adjusting the cooling time after agitation of the mixed liquid, that is, by delaying the time until gelation after agitation of the mixed liquid as compared to the producing method in the first embodiment. Specifically, the cooling time, during which the mixed liquid is cooled, is set to be slightly longer than that in the producing method in the first embodiment. Since the cooling time is set to be longer, the base oil and the water are (slightly) separated from each other in a vertical direction due to a difference in the specific gravity, in the container that contains the mixed liquid. Then, a layer having much base oil is formed at an upper portion of the mixed liquid, and a layer having much water is formed at a lower portion of the mixed liquid.

Accordingly, it is possible to obtain the gelled lubricant having the concentration gradient in which the concentration continuously decreases in a direction toward the lower portion. According to the third embodiment, it is possible to obtain advantageous effects similar to advantageous effects obtained in the second embodiment. Although three embodiments of the invention have been described, the present invention can be implemented in other embodiments.

For example, each of the lubricants GL, GLB, GLG may contain alcohol. Examples of alcohol include ethyl alcohol and isopropyl alcohol. For example, when the lubricant having the base oil concentration of 40% by weight is produced, the mixing ratio of the base oil, the water and the alcohol is 2 : 2 : 1. In addition, a base oil medium that is permeable to the base oil may be disposed so as to extend from the lubricant reservoir 19 to the annular groove 30. This base oil medium is formed of a material such as non-woven fabric (felt), paper, wood or the like.

It is also possible to produce the lubricants GL, GLB, GLG by using other methods different from the above-described producing method. As the other producing method, a method, in which the base oil is directly injected into the gelling agent, is conceivable. An example of this method is a method in which the granular base oil is injected into the gelling agent by using a syringe or the like. In this method, when the temperature of the mixed liquid is decreased to approximately 40°C, gelation of the base oil injected into the gelling agent starts. At this time, an inner portion of the gelling agent remains in a non-gelled state and a boundary portion between the gelling agent and the base oil is gelled, and a membrane is formed. Thereafter, the granular base oil is continuously injected into the membrane. The injection of the base oil is continued until the inner portion of the gelling agent is completely gelled.

In the embodiments described above, a case has been described as an example where the inner ring 5 and the inner ring spacer 26 serve as the rotation side that is rotated by the main shaft 2, and the outer ring 6 and the outer ring spacer 12 serve as the fixed side that is fixed to the housing (not illustrated) and thus is in a stationary state. However, the present invention can be applied to a case where the outer ring 6 and the outer ring spacer 12 serve as the rotation side and the inner ring 5 and the inner ring spacer 26 serve as the fixed side. In this case, the lubricant reservoir 19 is formed in the inner ring spacer 26.

Various modifications can be made to the present invention within the scope of the present invention.

## Claims

1. A rolling bearing device comprising:
a rolling bearing that includes an inner ring, an outer ring and multiple rolling elements disposed between the inner ring and the outer ring; and
a lubricant reservoir that is formed in a fixed side of the inner ring and the outer ring or in a member adjacent to the fixed side,
wherein a lubricant containing base oil, a gelling agent and water is disposed so as to be contained in the lubricant reservoir.

2. The rolling bearing device according to claim 1, wherein the lubricant is disposed so as to be contained in the lubricant reservoir so that a base oil concentration of the lubricant varies with respect to an axial direction of a shaft supported by the rolling bearing.

3. The rolling bearing device according to claim 2, wherein the lubricant is disposed so as to be contained in the lubricant reservoir so that the base oil concentration increases in a direction away from a raceway surface of the fixed side with respect to the axial direction.

4. The rolling bearing device according to claim 3, wherein the lubricant reservoir is formed in the member adjacent to the fixed side, the lubricant reservoir has an opening facing the fixed side that is the inner ring and outer ring, and the lubricant is disposed so as to be contained in the lubricant reservoir so that the base oil concentration increases in a direction away from the opening with respect to the axial direction.

5. The rolling bearing device according to claim 3 or 4, wherein the lubricant disposed so as to be contained in the lubricant reservoir is divided into multiple lubricant blocks having the base oil concentrations different from each other, and the lubricant blocks are disposed so that the oil concentration of the lubricant block is higher as the lubricant block is disposed further from the raceway surface with respect to the axial direction.

6. The rolling bearing device according to claim 3 or 4, wherein the lubricant disposed so as to be contained in the lubricant reservoir has a concentration gradient in which the base oil concentration continuously increases in the direction away from the raceway surface with respect to the axial direction.
